# EUROPEAN PATENT APPLICATION

(11) **EP 3 508 267 A1**
(43) Date of publication of application: **10.07.2019**
(21) Application number: 18248247.1
(22) Date of filing: 28.12.2018
(51) Int. Cl.: B01F 7/00, B01F 7/18, B01F 15/00, B01F 3/12, D21B 1/32

(54) **PROCESSING APPARATUS, SHEET MANUFACTURING APPARATUS, AND PROCESSING METHOD**

(30) Priority: 28.12.2017 JP 2017254974
(71) Applicant: Seiko Epson Corporation, Tokyo 160-8801 (JP)
(72) Inventor: SEKI, Shunichi, Suwa-shi, Nagano 392-8502 (JP); YOSHIOKA, Satomi, Suwa-shi, Nagano 392-8502 (JP)
(74) Representative: Miller Sturt Kenyon

(57) **Abstract**

A processing apparatus includes a deinking material supply portion (3) that supplies a deinking material (200) to defibrated fibers, and an agitating portion (2) that agitates a mixture of the deinking material and the fibers. The agitating portion includes a chamber (21) and a rotary blade (22) that rotates in the chamber.

## Description

### BACKGROUND

### 1. Technical Field

The present invention relates to a processing apparatus, a sheet manufacturing apparatus, and a processing method.

### 2. Related Art

In recent years, as environmental awareness has risen, it is required not only to reduce the amount of paper (recording medium) used in a workplace but also to recycle the paper in the workplace.

As a method for recycling the recording medium, for example, there is known a method of removing a recording layer (printed portion) by ejecting a blast material onto the recording layer of a used recording medium which is made of a sheet of paper and printed (for example, refer to JP-A-2000-284675). Thereafter, the recording medium from which the recording layer is removed becomes a usable medium again.

However, in the recycling method described in JP-A-2000-284675, since the blast material is ejected and applied while the recording medium remains in a sheet state, the blast material does not reach an ink existing on a rear side in a thickness direction of the recording medium, and as a result, the ink cannot be sufficiently removed.

### SUMMARY

An advantage of some aspects of the invention is to provide a processing apparatus, a sheet manufacturing apparatus, and a processing method capable of effectively removing a coloring (printing) material in a case where a fiber-containing material contains the coloring material.

The invention can be realized in the following aspects.

According to an aspect of the invention, a processing apparatus includes a deinking material supply portion that supplies a deinking material to a defibrated fiber, and an agitating portion that agitates in a state where the deinking material and the fiber are mixed.

Accordingly, in a case where the defibrated fiber contains, for example, a coloring material, the deinking material may be supplied to the defibrated fiber. By agitating (shearing) the defibrated fiber and the deinking material in a state of being mixed (dispersed), it is possible to effectively remove the coloring material from the fiber.

In the apparatus, it is preferable that the agitating portion include a chamber and a rotary blade that rotates in the chamber.

Accordingly, it is possible to mix (disperse) and agitate (shear) the fiber-containing material and the deinking material, and to separate the coloring material from the fiber-containing material, that is, to perform deinking.

In the apparatus, it is preferable that the rotary blade include a plurality of blades arranged around a rotation axis of the rotary blade.

Accordingly, an opportunity for the blade to come into contact with the fiber-containing material or the deinking material may be increased, and more powerful swirling flow may be generated. As a result, it is possible to more effectively separate the coloring material from the fiber-containing material.

In the apparatus, it is preferable that the rotary blade include a first rotary blade and a second rotary blade, which rotate around the same axis.

Accordingly, it is possible to mix (disperse) and agitate (shear) the fiber-containing material and the deinking material with the two rotary blades, so that deinking processing may be performed more effectively.

In the apparatus, it is preferable that the apparatus further include an adjusting unit that adjusts a volume of an agitating space in the chamber.

Accordingly, the deinking processing may be performed more effectively.

In the apparatus, it is preferable that the adjusting unit include a partition wall that partitions a portion of the agitating space, and a moving unit that moves the partition wall.

Accordingly, it is possible to easily adjust a volume of the agitating space.

In the apparatus, it is preferable that the partition wall include a ventilation port.

Accordingly, even if a gas (for example, air) is supplied into the agitating space, since the gas escapes to the outside of the agitating space via the ventilation port, it is possible to inhibit the internal pressure of the agitating space from being excessively increased.

In the apparatus, it is preferable that the agitating portion include a cylindrical body that has teeth formed on an inner periphery portion, and a rotating body that rotates inside the teeth and has teeth formed on an outer periphery portion.

Accordingly, the deinking processing may be performed between the cylindrical body and the rotating body.

In the apparatus, it is preferable that the apparatus further include a separating portion that separates the deinking material from the mixed deinking material and the fiber.

Accordingly, by the separating portion, it is possible to obtain the fiber from which the coloring material is removed.

According to another aspect of the invention, a sheet manufacturing apparatus includes a defibrating portion that defibrates a fiber-containing material containing a fiber, and the processing apparatus according to the invention.

Accordingly, even if the fiber-containing material is in the form of, for example, a sheet, the fiber may be obtained as a cotton-like defibrated material by the defibrating portion. In addition, even in a case where the fiber-containing material contains the coloring material and the defibrated fiber also contains and adheres the coloring material, the deinking material may be supplied to the defibrated material (defibrated fiber). By agitating (shearing) the defibrated material and the deinking material in a state of being mixed (dispersed), it is possible to effectively remove the coloring material from the fiber.

According to still another aspect of the invention, a processing method includes supplying a deinking material to a defibrated fiber, and mixing and agitating the deinking material and the fiber-containing material.

Accordingly, even in a case where the fiber-containing material contains, for example, the coloring material and the defibrated fiber also contains and adheres the coloring material, the deinking material may be supplied to the fiber. By mixing (dispersing) and agitating (shearing) the defibrated fiber and the deinking material, it is possible to effectively remove the coloring material from the fiber.

According to still another aspect of the invention, a processing method includes supplying a deinking material to a defibrated fiber, mixing the deinking material and the fiber, and agitating a mixture mixed in the mixing.

Accordingly, even in a case where the fiber-containing material contains, for example, the coloring material and the defibrated fiber also contains and adheres the coloring material, the deinking material may be supplied to the fiber. By mixing (dispersing) the fiber and the deinking material and agitating (shearing) in a mixed state, it is possible to effectively remove the coloring material from the fiber.

In the method, it is preferable that the mixing and agitating or the mixing and the agitating be performed by supplying a gas (for example, air).

Accordingly, even in a case where the fiber-containing material contains, for example, the coloring material and the defibrated fiber also contains and adheres the coloring material, the deinking material may be supplied to the defibrated fiber. By mixing (dispersing) and agitating (shearing) the defibrated fiber and the deinking material, it is possible to effectively remove the coloring material from the fiber.

### BRIEF DESCRIPTION OF THE DRAWINGS

Embodiments of the invention will now be described by of example only with reference to the accompanying drawings, wherein like numbers reference like elements.
Fig. 1 is a schematic configuration view (partial cross-sectional view) showing a first embodiment of a processing apparatus of the invention.
Fig. 2 is a schematic side view showing a first embodiment of a sheet manufacturing apparatus of the invention.
Fig. 3 is a flow chart sequentially showing steps performed by the sheet manufacturing apparatus shown in Fig. 2.
Fig. 4 is a perspective view of a rotary blade provided in an agitating portion of the processing apparatus shown in Fig. 1.
Fig. 5 is an image diagram of deinking processing performed by the processing apparatus shown in Fig. 1.
Fig. 6 is an image diagram of the deinking processing performed by the processing apparatus shown in Fig. 1.
Fig. 7 is a partial cross-sectional view of an agitating portion provided in a second embodiment of the processing apparatus of the invention.
Fig. 8 is a perspective view showing a rotary blade provided in the agitating portion of the processing apparatus shown in Fig. 7.
Fig. 9 is a partial cross-sectional view of an agitating portion provided in a third embodiment of the processing apparatus of the invention.
Fig. 10 is a partial cross-sectional view of the agitating portion provided in the third embodiment of the processing apparatus of the invention.
Fig. 11 is a perspective view of a rotary blade provided in a fourth embodiment of the processing apparatus of the invention.
Fig. 12 is a cross-sectional view of an agitating portion provided in the fourth embodiment of the processing apparatus of the invention.
Fig. 13 is a schematic configuration view (partial cross-sectional view) showing a fifth embodiment of the processing apparatus of the invention.
Fig. 14 is a flow chart sequentially showing steps performed by a sheet manufacturing apparatus provided with the processing apparatus shown in Fig. 13.

### DESCRIPTION OF EXEMPLARY EMBODIMENTS

Hereinafter, a processing apparatus, a sheet manufacturing apparatus, and a processing method of the invention will be described in detail based on preferred embodiments shown in the accompanying drawings.

### First Embodiment

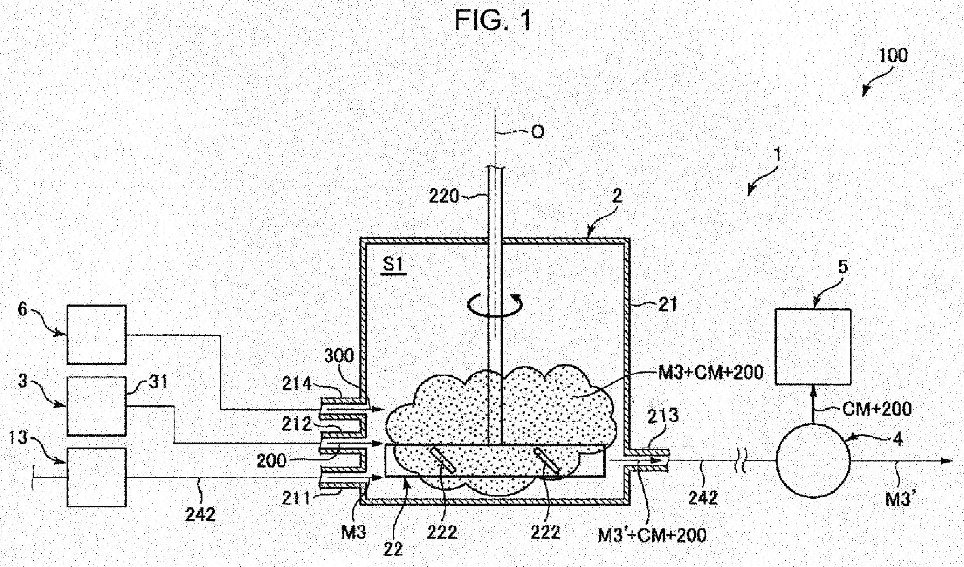

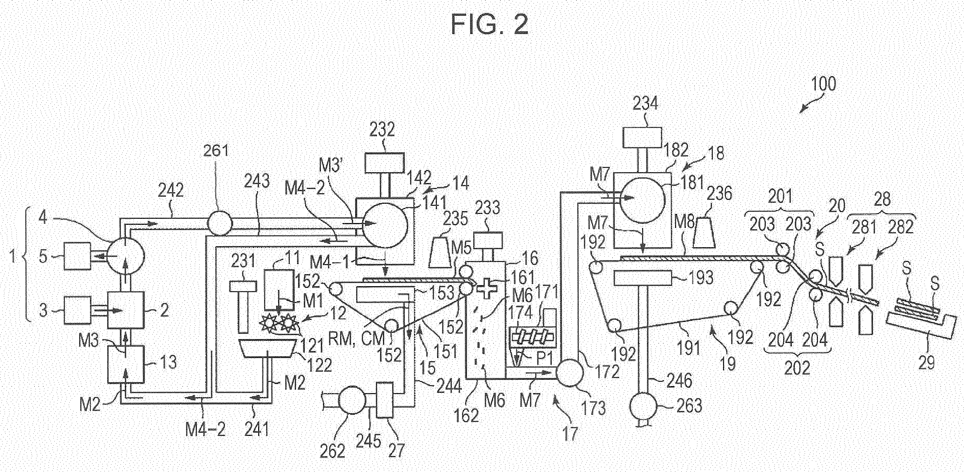

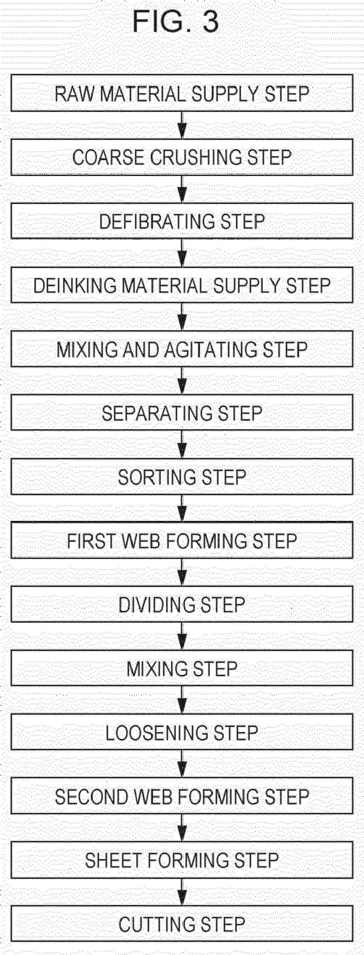

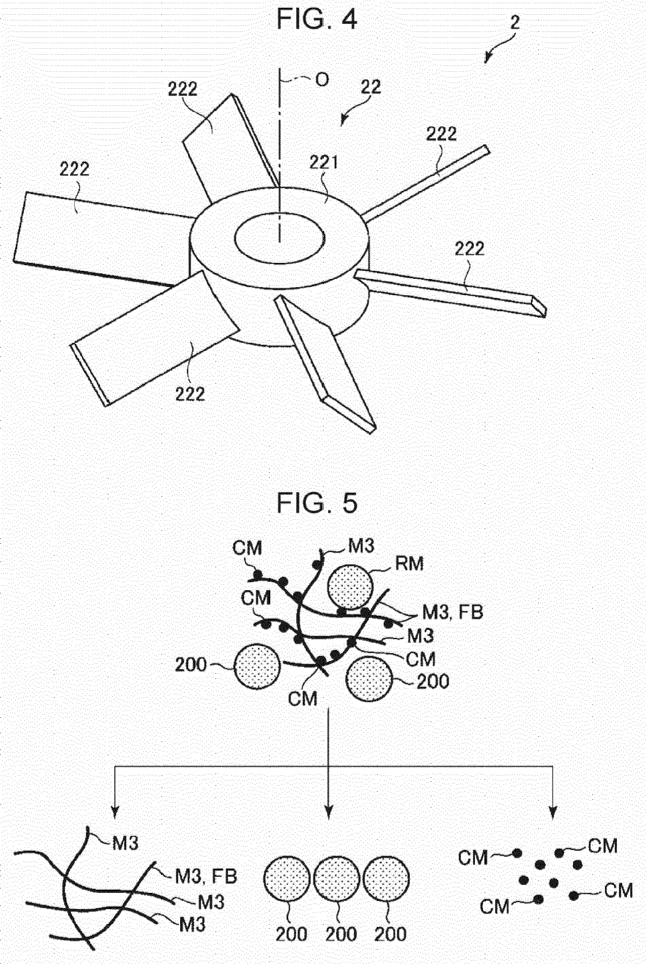

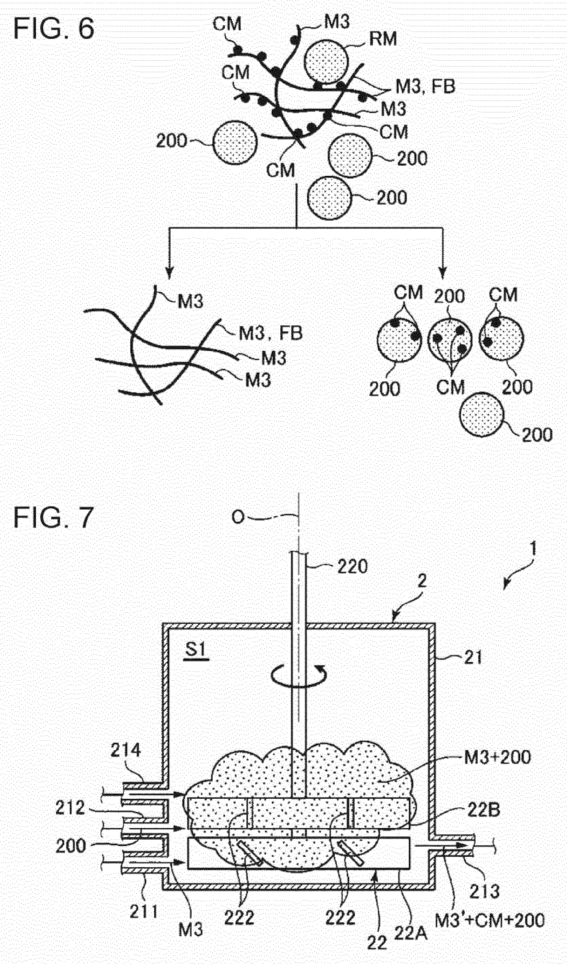

Fig. 1 is a schematic configuration view (partial cross-sectional view) showing a first embodiment of a processing apparatus of the invention. Fig. 2 is a schematic side view showing a first embodiment of a sheet manufacturing apparatus of the invention. Fig. 3 is a flow chart sequentially showing steps performed by the sheet manufacturing apparatus shown in Fig. 2. Fig. 4 is a perspective view of a rotary blade provided in an agitating portion of the processing apparatus shown in Fig. 1. Fig. 5 is an image diagram of deinking processing performed by the processing apparatus shown in Fig. 1. Fig. 6 is an image diagram of the deinking processing performed by the processing apparatus shown in Fig. 1.

Hereinafter, for convenience of description, an upper side may be referred to as "upper" or "upward", a lower side may be referred to as "lower" or "downward", a left side may be referred to as "left" or "upstream side", and a right side in Fig. 1 may be referred to as "right" or "downstream side".

The processing apparatus 1 shown in Figs. 1 and 2 is provided with a deinking material supply portion 3 that supplies a deinking material 200 to a defibrated fiber M3 serving as a defibrated fiber, and an agitating portion 2 that mixes and agitates the supplied deinking material 200 and the defibrated material M3 serving as the defibrated fiber.

As a result, in a case where the defibrated material M3 serving as the defibrated fiber contains a coloring material CM, the deinking material 200 can be supplied to the defibrated material M3. By mixing (dispersing) and agitating (shearing) the defibrated material M3 and the deinking material 200, it is possible to effectively remove the coloring material CM from the fiber.

The processing performed by the processing apparatus 1 can be said to be deinking processing of used paper. In the deinking processing in the related art, the processing of dispersing the used paper in water, releasing the coloring agent mechanically and chemically

(surfactants, alkaline chemicals, or the like), and removing the coloring material by a floating method, a screen washing method or the like is normally used. In this disclosure, deinking can be performed without requiring the used paper to soak in water. The deinking can be said to be a dry deinking technique.

In addition, the sheet manufacturing apparatus shown in Fig. 2 is provided with a defibrating portion 13 that defibrates a fiber-containing material to be defibrated (sheet-like raw material M1 such as used paper, or coarse crushed pieces M2 obtained by crushing raw material M1 with coarse crushing blade 121 such as a shredder, for example) in the air and discharging a cotton-like defibrated material M3 (defibrated fiber), and the processing apparatus 1.

As a result, the material to be defibrated serving as the raw material can be used as the defibrated material M3. In addition, in a case where the defibrated material M3 includes the coloring material CM, it is possible to supply the deinking material 200 to the defibrated material M3. By mixing (dispersing) and agitating (shearing) the defibrated material M3 and the deinking material 200, it is possible to effectively remove the coloring material CM from the fiber. For example, by manufacturing a sheet S using fibers from which the coloring material CM (defibrated material M3') is removed, it is possible to manufacture the sheet S with high whiteness.

Hereinafter, the configuration of each component in the sheet manufacturing apparatus 100 will be described.

The sheet manufacturing apparatus 100 shown in Figs. 1 and 2 is provided with the processing apparatus 1, a raw material supply portion 11, a coarse crushing portion 12, the defibrating portion 13, a sorting portion 14, a first web forming portion 15, a subdividing portion 16, a mixing portion 17, a loosening portion 18, a second web forming portion 19, a sheet forming portion 20, a cutting portion 28, and a stock portion 29. In addition, the sheet manufacturing apparatus 100 is provided with a humidifying portion 231, a humidifying portion 232, a humidifying portion 233, a humidifying portion 234, a humidifying portion 235, and a humidifying portion 236. The operation of each part of the sheet manufacturing apparatus 100 is controlled by a control unit (not shown).

As shown in Fig. 3, in the embodiment, the method for manufacturing a sheet includes a raw material supply step, a coarse crushing step, a defibrating step, a deinking material supply step, a mixing and agitating step, a separating step, a sorting step, a first web forming step, a dividing step, a mixing step, a loosening step, a second web forming step, a sheet forming step, and a cutting step. In addition, among these steps, the steps (processing method) performed by the processing apparatus 1 are the deinking material supply step, the mixing and agitating step, and the separation step.

In addition, the processing method is performed by the processing apparatus 1 shown in Figs. 1 and 2, and includes the deinking material supply step of supplying the deinking material 200 to the defibrated material M3 serving as the defibrated fiber, and the mixing and agitating step of mixing and agitating the supplied deinking material 200 and the defibrated material M3 serving as the defibrated fiber (refer to Fig. 3).

As a result, in a case where the defibrated material M3 serving as the defibrated fiber contains the coloring material CM, it is possible to supply the deinking material 200 to the defibrated material M3. By mixing (dispersing) and agitating (shearing) the defibrated material M3 and the deinking material 200, it is possible to effectively remove the coloring material CM from the fiber.

The raw material supply portion 11 is a portion that performs the raw material supply step (refer to Fig. 3) of supplying the raw material M1 serving as a fiber-containing material to the coarse crushing portion 12. The raw material M1 is, for example, a sheet-like material formed of a material containing a fiber (cellulose fiber). In addition, in the embodiment, although the raw material M1 serving as the fiber-containing material is used paper, that is, a used sheet, it is not limited thereto, and it may be an unused sheet. In a case where the unused sheet is used, removal of printing ink or the like is not performed, and it is possible to remove dirt and foreign material adhering to the sheet. The cellulose fiber may be any one as long as it is fibrous mainly formed of cellulose as a compound. The cellulose fiber is not limited as long as it is fibrous mainly formed of cellulose (narrowly defined cellulose) as a compound, and may contain hemicellulose and lignin in addition to cellulose (narrowly defined cellulose).

The coarse crushing portion 12 is a portion that performs the coarse crushing step (refer to Fig. 3) of crushing the raw material M1 supplied from the raw material supply portion 11 in the air (in air). The coarse crushing portion 12 has a pair of coarse crushing blades 121 and a chute 122 (hopper).

By rotating in a direction opposite to each other, the pair of coarse crushing blades 121 can coarsely crush, that is, cut the raw material M1 therebetween into coarse crushed pieces M2. The shape and size of the coarse crushed pieces M2 are preferably suitable for defibrating processing in the defibrating portion 13. For example, each is preferably a small piece having a side length of 100 mm or less, and more preferably a small piece of 10 mm or more and 70 mm or less.

The chute 122 is disposed below the pair of coarse crushing blades 121, and has a funnel shape, for example. As a result, the chute 122 can receive the coarse crushed pieces M2 that are crushed and dropped by the coarse crushing blade 121.

In addition, above the chute 122, the humidifying portion 231 is disposed adjacent to the pair of coarse crushing blades 121. The humidifying portion 231 humidifies the coarse crushed pieces M2 in the chute 122. The humidifying portion 231 has a filter (not shown) containing moisture, and is formed of a vaporization type (or warm air vaporization type) humidifier which supplies humidified air having increased humidity to the coarse crushed pieces M2 by allowing air to pass through the filter. By supplying the humidified air to the coarse crushed pieces M2, it is possible to inhibit the adhesion of the coarse crushed pieces M2 to the chute 122 or the like due to static electricity.

The chute 122 is connected to the defibrating portion 13 via a pipe 241 (flow path). The coarse crushed pieces M2 collected in the chute 122 pass through the pipe 241 and are transported to the defibrating portion 13.

The defibrating portion 13 is a portion that performs a defibrating step (refer to Fig. 3) of defibrating the coarse crushed pieces M2 (pieces obtained by crushing a fiber-containing material including fibers and aggregates thereof) in the air, that is, in a dry manner. By the defibrating processing at the defibrating portion 13, the defibrated material M3 can be generated from the coarse debris M2. Here, "to defibrate" refers to unravel the coarse debris M2 formed by binding a plurality of fibers to each other one by one. This unraveled material is the defibrated material M3. The shape of the defibrated material M3 is a linear shape or a belt shape. In addition, the defibrated material M3 may exist in a state of being intertwined to form a lump, that is, in a state of forming a so-called "Dama" - that is, a flocculated lump. When the material is formed of fibers, such a lump may be termed a "hairball".

In the embodiment, for example, the defibrating portion 13 is formed of an impeller mill (not shown) having a rotor rotating at high speed and a liner positioned on an outer periphery of the rotor. The coarse crushed pieces M2 flowing into the defibrating portion 13 are interposed between the rotor and the liner and defibrated.

In addition, the defibrating portion 13 can generate a flow of air (air flow) from the coarse crushing portion 12 to the sorting portion 14 by the rotation of the rotor. As a result, the coarse crushed pieces M2 can be sucked from the pipe 241 to the defibrating portion 13. In addition, after the defibrating processing, the defibrated material M3 can be sent out to the sorting portion 14 via a pipe 242.

The defibrating portion 13 also has a function of separating resin particles adhering to the defibrated material M3 (coarse crushed pieces M2), coloring material CM such as ink, toner, and the like, and substances such as anti-blotting agent from the fiber.

In addition, the defibrating portion 13 is connected to the processing apparatus 1 via the pipe 242 (flow path). In the processing apparatus 1, the deinking material is supplied to the defibrated material M3 as described later, these are mixed and agitated, and the coloring material CM is removed from the fiber of the defibrated material M3. In addition, the processing apparatus 1 is connected to the sorting portion 14 via the pipe 242. The defibrated material M3' from which the coloring material CM is removed passes through the pipe 242 and is transported to the sorting portion 14.

In addition, a blower 261 is installed in the middle of the pipe 242. The blower 261 is an air flow generating device that generates an air flow toward the sorting portion 14. As a result, the delivery of the defibrated material M3 to the sorting portion 14 is promoted.

The sorting portion 14 has a drum portion 141 and a housing portion 142 that houses the drum portion 141.

The drum portion 141 is formed of a cylindrical mesh body and is a sieve that rotates about the central axis. The defibrated material M3 or the defibrated material M3' flows into the drum portion 141. As the drum portion 141 rotates, the defibrated material M3' that is smaller than a mesh opening is sorted as a first sorted object M4-1, and the defibrated material M3' that is larger than the mesh opening is sorted as a second sorted object M4-2.

The first sorted object M4-1 falls from the drum portion 141.

On the other hand, the second sorted object M4-2 is sent out to a pipe 243 (flow path) connected to the drum portion 141. The pipe 243 is connected to the pipe 241 on the side (downstream side) opposite to the drum portion 141. The second sorted object M4-2 passed through the pipe 243, joins the coarse crushed pieces M2 in the pipe 241, and flows into the defibrating portion 13 with the coarse crushed pieces M2. As a result, the second sorted object M4-2 is returned to the defibrating portion 13 and is subjected to the defibrating processing with the coarse crushed pieces M2.

In addition, the first sorted object M4-1 from the drum portion 141 falls while dispersing in the air and heads toward the first web forming portion 15 located below the drum portion 141. The first web forming portion 15 is a portion for performing the first web forming step (refer to Fig. 2) of forming a first web M5 from the first sorted object M4-1. The first web forming portion 15 has a mesh belt 151, three stretching rollers 152, and a suction portion 153 (suction mechanism).

The mesh belt 151 is an endless belt, and the first sorted object M4-1 is accumulated. The mesh belt 151 is wrapped around three stretching rollers 152. By rotationally driving the stretching roller 152, the first sorted object M4-1 on the mesh belt 151 is transported to the downstream side.

The first sorted object M4-1 is larger than the mesh opening of the mesh belt 151. As a result, the first sorted object M4-1 is restricted from passing through the mesh belt 151, and thus can be accumulated on the mesh belt 151. In addition, since the first sorted object M4-1 is accumulated on the mesh belt 151 while being transported to the downstream side with the mesh belt 151, the first sorted object M4-1 is formed as a layered first web M5.

In addition, in the first sorted object M4-1, impurities such as filler contained in the raw material M1 may coexist. This impurity is smaller than the mesh opening of the mesh belt 151. As a result, the impurities pass through the mesh belt 151 and fall further downward.

The suction portion 153 can suck air from below the mesh belt 151. As a result, the impurities passed through the mesh belt 151 can be sucked with air.

In addition, the suction portion 153 is connected to a collecting portion 27 via a pipe 244 (flow path). The coloring materials CM and impurities sucked by the suction portion 153 are collected by the collecting portion 27.

A pipe 245 (flow path) is further connected to the collecting portion 27. In addition, a blower 262 is installed in the middle of the pipe 245. By the operation of the blower 262, a suction force can be generated by the suction portion 153. As a result, formation of the first web M5 on the mesh belt 151 is promoted. The first web M5 is obtained by removing the coloring material CM and impurities. In addition, the coloring material CM and impurities reach the collecting portion 27 after passing through the pipe 244 by operation of the blower 262.

The housing portion 142 is connected to the humidifying portion 232. The humidifying portion 232 is formed of a vaporization type humidifier similar to the humidifying portion 231. As a result, humidified air is supplied into the housing portion 142. By this humidified air, it is possible to humidify the first sorted object M4-1, and thus it is possible to inhibit the first sorted object M4-1 from adhering to an inner wall of the housing portion 142 due to electrostatic force.

On the downstream side of the sorting portion 14, the humidifying portion 235 is disposed. The humidifying portion 235 is formed of an ultrasonic humidifier for spraying water. As a result, moisture can be supplied (humidified) to the first web M5, and thus the moisture content of the first web M5 is adjusted. By this adjustment, the first web M5 can be inhibited from sticking to the mesh belt 151 due to electrostatic force. As a result, the first web M5 is easily separated from the mesh belt 151 at a position where the mesh belt 151 is folded back by the stretching roller 152.

On the downstream side of the humidifying portion 235, the subdividing portion 16 is disposed. The subdividing portion 16 is a portion that performs the dividing step (refer to Fig. 3) of dividing the first web M5 separated from the mesh belt 151. The subdividing portion 16 has a propeller 161 rotatably supported and a housing portion 162 housing the propeller 161. By winding the first web M5 around the rotating propeller 161, it is possible to divide the first web M5. The divided first web M5 becomes subdivided bodies M6. In addition, each subdivided body M6 descends within the housing portion 162.

The housing portion 162 is connected to the humidifying portion 233. The humidifying portion 233 is formed of a vaporization type humidifier similar to the humidifying portion 231. As a result, humidified air is supplied into the housing portion 162. By this humidified air, it is also possible to prevent the subdivided bodies M6 from adhering to the inner wall of the propeller 161 and the housing portion 162 due to electrostatic force.

On the downstream side of the subdividing portion 16, the mixing portion 17 is disposed. The mixing portion 17 is a portion that performs the mixing step (refer to Fig. 3) of mixing the subdivided bodies M6 and a resin P1. The mixing portion 17 includes a resin supply portion 171, a pipe (flow path) 172, and a blower 173.

The pipe 172 connects the housing portion 162 of the subdividing portion 16 and a housing portion 182 of the loosening portion 18, and is a flow path through which a mixture M7 of the subdivided bodies M6 and the resin P1 passes.

The resin supply portion 171 is connected to the middle of the pipe 172. The resin supply portion 171 has a screw feeder 174. By rotationally driving the screw feeder 174, it is possible to supply the resin P1 as a powder or particles to the pipe 172. The resin P1 supplied to the pipe 172 is mixed with the subdivided bodies M6 to be the mixture M7.

The resin P1 bonds the fibers to each other in a later step. For example, a thermoplastic resin, a curable resin, or the like can be used, and a thermoplastic resin is preferably used. Examples of thermoplastic resin include polyolefin such as AS resin, ABS resin, polyethylene, polypropylene, ethylene-vinyl acetate copolymer (EVA), acrylic resins such as modified polyolefins, polymethyl methacrylate, polyester such as polyvinyl chloride, polystyrene, polyethylene terephthalate, polybutylene terephthalate, polyamides (nylon) such as nylon 6, nylon 46, nylon 66, nylon 610, nylon 612, nylon 11, nylon 12, nylon 6-12, nylon 6-66, liquid crystal polymers such as polyphenylene ether, polyacetal, polyether, polyphenylene oxide, polyether ether ketone, polycarbonate, polyphenylene sulfide, thermoplastic polyimide, polyetherimide, aromatic polyester, various thermoplastic elastomers such as styrene type, polyolefin type, polyvinyl chloride type, polyurethane type, polyester type, polyamide type, polybutadiene type, trans polyisoprene type, fluoro rubber type, chlorinated polyethylene type, and the like. One type or two or more types selected from these can be used in combination. Preferably, as the thermoplastic resin, a polyester or a resin containing polyester is used.

As a material supplied from the resin supply portion 171, for example, a coloring agent for coloring the fibers, an aggregation inhibitor for inhibiting coagulation of the fibers or aggregation of the resin P1, a flame retardant for making the fibers less susceptible to burning, and the like may be included, in addition to the resin P1. In addition, there may also be a vegetable material such as starch.

In addition, the blower 173 is installed on the downstream side of the resin supply portion 171 in the pipe 172. The blower 173 can generate the air flow towards the loosening portion 18. With this air flow, the subdivided bodies M6 and the resin P1 can be agitated in the pipe 172. As a result, the mixture M7 can flow into the loosening portion 18 in a state where the subdivided bodies M6 and the resin P1 are uniformly dispersed. In addition, the subdivided bodies M6 in the mixture M7 are loosened in the process of passing through the inside of the pipe 172, and become more finely fibrous.

The loosening portion 18 is a portion for performing the loosening step (refer to Fig. 3) of loosening the mutually entangled fibers in the mixture M7. The loosening portion 18 has a drum portion 181 and a housing portion 182 for housing the drum portion 181.

The drum portion 181 is formed of a mesh body having a cylindrical shape and is a sieve rotating around the central axis. The mixture M7 flows into the drum portion 181. As the drum portion 181 rotates, fibers or the like smaller than the mesh opening of the mixture M7 can pass through the drum portion 181. At that time, the mixture M7 is loosened.

In addition, the mixture M7 loosened by the drum portion 181 falls while dispersing in the air and heads toward the second web forming portion 19 located below the drum portion 181. The second web forming portion 19 is a portion for performing the second web forming step (refer to Fig. 3) of forming a second web M8 from the mixture M7. The second web forming portion 19 includes a mesh belt 191 (separation belt), a stretching roller 192, and a suction portion 193 (suction mechanism).

The mesh belt 191 is an endless belt, and the mixture M7 is accumulated. The mesh belt 191 is wrapped around four stretching rollers 192. By rotationally driving the stretching rollers 192, the mixture M7 on the mesh belt 191 is transported to the downstream side.

In addition, most of the mixture M7 on the mesh belt 191 is larger than the mesh opening of the mesh belt 191. As a result, the mixture M7 is restricted from passing through the mesh belt 191, and thus can be accumulated on the mesh belt 191. In addition, since the mixture M7 is accumulated on the mesh belt 191 while being transported to the downstream side with the mesh belt 191, the mixture M7 is formed as the layered second web M8.

The suction portion 193 can suck air from below the mesh belt 191. As a result, the mixture M7 can be sucked onto the mesh belt 191, and thus the accumulation of the mixture M7 is promoted on the mesh belt 191.

A pipe 246 (flow path) is connected to the suction portion 193. In addition, a blower 263 is installed in the middle of the pipe 246. By the operation of the blower 263, suction force can be generated by the suction portion 193.

The housing portion 182 is connected to the humidifying portion 234. The humidifying portion 234 is formed of a vaporization type humidifier similar to the humidifying portion 231. As a result, humidified air is supplied into the housing portion 182. By this humidified air, it is possible to humidify the interior of the housing portion 182, and thus it is possible to inhibit the mixture M7 from adhering to the inner wall of the housing portion 182 due to electrostatic force.

On the downstream side of the loosening portion 18, the humidifying portion 236 is disposed. The humidifying portion 236 is formed of an ultrasonic humidifier similar to the humidifying portion 235. As a result, moisture can be supplied to the second web M8, and thus the moisture content of the second web M8 is adjusted. By this adjustment, the second web M8 can be inhibited from sticking onto the mesh belt 191 due to electrostatic force. As a result, the second web M8 is easily separated from the mesh belt 191 at a position where the mesh belt 191 is folded back by the stretching roller 192.

On the downstream side of the second web forming portion 19, the sheet forming portion 20 is disposed. The sheet forming portion 20 is a portion for performing the sheet forming step (refer to Fig. 3) of forming the sheet S from the second web M8. The sheet forming portion 20 includes a pressurizing portion 201 and a heating portion 202.

The pressurizing portion 201 has a pair of calender rollers 203, and can apply pressure without heating the second web M8 therebetween. As a result, the density of the second web M8 is increased. The second web M8 is transported toward the heating portion 202. One of the pair of calender rollers 203 is a main driving roller driven by the operation of a motor (not shown), and the other is a driven roller.

The heating portion 202 has a pair of heating rollers 204, and can apply pressure while heating the second web M8 therebetween. With this heating and pressurization, in the second web M8, the resin P1 is melted, and the fibers are bonded to each other via the molten resin P1. As a result, the sheet S is formed. The sheet S is transported toward the cutting portion 28. One of the pair of heating rollers 204 is a main driving roller driven by operation of a motor (not shown), and the other is a driven roller.

On the downstream side of the sheet forming portion 20, the cutting portion 28 is disposed. The cutting portion 28 is a portion that performs the cutting step (refer to Fig. 3) of cutting the sheet S. The cutting portion 28 includes a first cutter 281 and a second cutter 282.

The first cutter 281 cuts the sheet S in a direction intersecting with (across) the transport direction of the sheet S.

The second cutter 282 cuts the sheet S in a direction parallel to the transport direction of the sheet S on the downstream side of the first cutter 281.

By cutting the first cutter 281 and the second cutter 282 as described above, a sheet S having a desired size can be obtained. The sheet S is further transported to the downstream side and accumulated in the stock portion 29.

Next, the processing apparatus 1 will be described in detail.

As shown in Figs. 1 and 2, the processing apparatus 1 is provided in the middle of the pipe 242 and between the defibrating portion 13 and the sorting portion 14. The processing apparatus 1 has a function of removing the coloring material CM in the defibrated material M3 defibrated by the defibrating portion 13.

The processing apparatus 1 includes the agitating portion 2, the deinking material supply portion 3, a separating portion 4, a collecting portion 5, and a gas supply portion 6. In the processing apparatus 1, the deinking material supplying step is performed by the deinking material supply portion 3, the mixing and agitating step is performed by the agitating portion 2, and the separating step is performed by the separating portion 4.

The agitating portion 2 includes a chamber 21 provided on the downstream side of the defibrating portion 13 and the rotary blade 22 rotating in the chamber 21. As a result, as will be described below, it is possible to mix and agitate the defibrated material M3 and the deinking material 200, and to separate the coloring material CM from the fiber FB of the defibrated material M3, that is, to perform deinking.

"Deinking" in this specification refers to removing the coloring material CM such as ink or toner from the fiber FB. That is, even if the coloring material CM is a color other than black, removal of the coloring material CM from the fiber FB is collectively referred to as "deinking".

As shown in Fig. 1, the chamber 21 includes a defibrated material supply port 211 to which the defibrated material M3 is supplied, a deinking material supply port 212 to which the deinking material 200 is supplied, a discharge port 213 for discharging the defibrated material M3 (fiber FB to which coloring material CM is attached) and the deinking material 200, and a gas supply port 214 to which a gas (for example, air) 300 is supplied. In addition, the space inside the chamber 21 becomes an agitating space S1 for mixing and agitating the defibrated material M3 and the deinking material 200.

The defibrated material supply port 211 is connected to the defibrating portion 13. The deinking material supply port 212 is connected to the deinking material supply portion 3. The discharge port 213 is connected to the separating portion 4. The gas supply port 214 is connected to, for example, a gas supply portion 6 formed of a pump, a compressor, or the like.

If the defibrated material M3 (fiber FB to which coloring material CM is attached) is supplied to the agitating space S1 from the defibrated material supply port 211 and the deinking material 200 is supplied from the deinking material supply port 212, these are mixed and agitated by the rotation of the rotary blade 22. As a result, the coloring material CM is separated from the fiber FB of the defibrated material M3. In this state, by supplying the gas (for example, air) 300 from the gas supply portion 6 to the agitating space S1 via the gas supply port 214, the internal pressure of the agitating space S1 is increased, the defibrated material M3 (fiber FB), the coloring material CM, and the deinking material 200 are discharged from the discharge port 213 and head toward the separating portion 4 to be described later.

An open and close valve (not shown) is provided, for example, in each of the defibrated material supply port 211, the deinking material supply port 212, the discharge port 213, and the gas supply port 214, and the operation thereof is controlled by a control unit (not shown). As a result, it is possible to control supply and discharge of the defibrated material M3, the coloring material CM, the deinking material 200 and the gas (for example, air) as described above.

The rotary blade 22 is provided in the vicinity of the bottom portion in the chamber 21, is connected to a rotary drive source via a shaft 220, and rotates around a rotation axis O. As a result, the rotary blade 22 directly contacts the defibrated material M3 and the deinking material 200 to mix and agitate the defibrated material M3 and the deinking material 200, and/or to generate a swirling flow in the agitating space S1. Therefore, by this swirling flow, the defibrated material M3 and the deinking material 200 can be mixed and agitated. As a result, it is possible to more effectively separate the coloring material CM from the fiber FB of the defibrated material M3.

The rotary blade 22 may be configured to rotate in only one direction, or alternatively may rotate alternately in both directions.

In addition, as shown in Fig. 4, the rotary blade 22 includes a boss 221 and a plurality (six in the configuration shown in drawing) of blades 222 formed to protrude in the radial direction from the boss 221, and arranged circumferentially around the rotation axis of the rotary blade 22. As a result, it possible to increase the opportunity for the blades 222 to come into contact with the defibrated material M3 or the deinking material 200, and to generate a more powerful swirling flow and shearing. As a result, it is possible to more effectively separate the coloring material CM from the fiber FB of the defibrated material M3.

In addition, each of the blades 222 has a rectangular shape in a plan view and is disposed so as to be inclined in the same direction. That is, the normal line of (a line orthogonal to the plane of)the blade 222 is inclined with respect to the rotation axis O. The direction of the inclination may be inclined toward the front in the rotation direction or may be inclined toward the rear in the rotation direction.

In the configuration shown in the drawing, although the plate pieces are arranged at equal intervals around the rotation axis O, it is not limited thereto, and there may be portions where the plate pieces are randomly distributed, that is, the placement intervals are different from each other.

In addition, although the shape of the plate piece is a rectangle (quadrangle) in the configuration shown in the drawing, it is not limited thereto. The shape may be any shape such as a circle, an ellipse, a triangle, a polygon such as a pentagon or similar, or a shape with rounded corners. In addition, the blades 222 may be twisted from a blade root to a blade tip.

The deinking material supply portion 3 includes a storage portion 31 connected to the deinking material supply port 212 and storing the deinking material 200, and a screw feeder (not shown) provided in the storage portion 31. By rotationally driving the screw feeder, the deinking material 200 is supplied to the chamber 21 via the deinking material supply port 212.

Examples of the deinking material 200 include particles or powder (refer to Fig. 5) which collide with particles of the coloring material CM to release the coloring material CM from the fiber FB to which the coloring material CM is attached, a liquid (refer to Fig. 6) that coagulates the coloring material CM to facilitate separation from the fiber FB in the separating portion 4, and the like. In addition, although not shown, the deinking material 200 may be particles or powder which can be removed in a state where the coloring material CM is released from the fiber FB and transferred and adhered to the deinking material 200.

### Particles

The particles preferably have a Mohs hardness of 2 or more and 5 or less, and more preferably 2 or more and 4 or less. As a result, the adsorption and removal ability of the coloring material CM is effectively exhibited. If the Mohs hardness of the particles is less than the above lower limit, depending on the conditions such as the type and amount of the coloring material CM, the adsorption and removal ability of the coloring material CM from the defibrated material M3 may be insufficient. In addition, if the Mohs hardness of the coloring material CM exceeds the above upper limit, for example, there is a possibility that damage at the time of collision is applied to the defibrated material M3. Such particles are not particularly limited, and include, for example, the following particles.

The particles are preferably formed of, for example, a resin type material. The resin type material is not particularly limited, and examples thereof include various thermoplastic resins and various thermosetting resins.

Examples of thermoplastic resin include polyolefins such as polyethylene, polypropylene, ethylene-vinyl acetate copolymer, a liquid crystal polymer such as modified polyolefin, polyamide (example: nylon 6, nylon 46, nylon 66, nylon 610, nylon 612, nylon 11, nylon 12, nylon 6-12, nylon 6-66), thermoplastic polyimide, aromatic polyester, various thermoplastic elastomers such as polyphenylene oxide, polyphenylene sulfide, polycarbonate, polymethyl methacrylate, polyether, polyether ether ketone, polyether imide, polyacetal, styrene type, polyolefin type, polyvinyl chloride type, polyurethane type, polyester type, polyamide type, polybutadiene type, trans polyisoprene type, fluoro rubber type, chlorinated polyethylene type, or copolymers mainly containing these, blends, polymer alloys. One type or two or more types of these can be mixed and used. Among these, polyamide and polycarbonate are particularly preferably used.

Examples of thermosetting resin include an epoxy resin, a phenol resin, a urea resin, a melamine resin, polyester (unsaturated polyester) resin, polyimide resin, silicone resin, polyurethane resin, and the like. One type or two or more types of these can be mixed and used. Among these, urea resin and melamine resin are particularly preferably used.

By using such a resin type material, the particles can sufficiently exhibit the function (adsorption and removal ability of the coloring material CM) as the above removal particles. In addition, even if the particles collide with the defibrated material M3, it is possible to inhibit the damage due to the collision from being applied to the defibrated material M3. In addition, even if particles remain in the step on the downstream side of the particle supply step, it is possible to inhibit the quality of the sheet S to be produced from deteriorating.

In a case where the particles are formed of a resin type material, the average particle diameter of the particles is preferably in the range of 1 µlm or more and 1000 µm or less, and more preferably in the range of 10 µm or more and 500 µm or less. In addition, it is preferable that the adsorption of and the ability to remove the coloring material CM be high.

In this disclosure, the average particle diameter refers to an average particle diameter on a volume basis. The average particle diameter of the powder refers to the number average value of sphere equivalent volume measured using a dry type particle size distribution meter and calculated by analysis using a static image analyzer (static image analysis apparatus: Morphologi G3: manufactured by Malvern).

In addition or instead, it is preferable that the particle be made of, for example, a plant type material, in addition to the resin type material. The plant type material is not particularly limited, and examples thereof include a crushed outer shell of the seed of the plant and a crushed actual shell of the plant fruit.

As seeds of plants, for example, seeds of walnut, peach, apricot, and the like can be used.

As a plant fruit, dried corn grain, dried wheat endosperm, and the like can be used.

By using such a plant type material, the particles can sufficiently exhibit the function as the above removal particles (adsorption and removal ability of coloring material CM) similarly to the resin type material. In addition, even if the particles collide with the defibrated material M3, it is possible to inhibit the damage due to the collision from being applied to the defibrated material M3.

In a case where the particles are made of a plant type material, the average particle diameter of the particles is preferably in the range of 1 µlm or more and 1000 µm or less, and more preferably in the range of 10 µm or more and 500 µm or less. In addition, it is preferable that the adsorption of and the ability to remove the coloring material CM be high.

In addition, the particles may be, for example, a porous body or may be particles having minute unevenness.

In addition, the particles may be dry ice (solid carbon dioxide). In addition, the temperature of the dry ice particles is not particularly limited, and for example, it is preferable to set the temperature of the particles -110°C or higher and -70°C or lower in consideration of the balance between time to sublimation and hardness. By using dry ice as particles, since the deinking material 200 sublimes over time, it is possible to omit the step of collecting the deinking material 200 and more reliably inhibit the deinking material 200 from being mixed in the sheet S.

### Powder

The deinking material 200 may be a powder containing cellulose. Since the defibrated material M3 also contains cellulose, even when the powder collides with the defibrated material M3 at the time of removing the coloring material CM, it is possible to inhibit the damage that the defibrated material M3 (fiber FB) receives by the collision. In addition, even if powder remaining in the defibrated material M3 is present, since the powder is originally contained in the defibrated material M3, it does not become an impurity and the defibrated material M3' after removal of the coloring material CM is advantageous for recycling as described above.

The cellulose contained in the powder may be a cellulose having cellulose (cellulose in a narrow sense) as a compound as a main component and formed of a fibrous form, similarly to the cellulose contained in the raw material M1 described above, or may include cellulose containing hemicellulose and lignin in addition to cellulose (cellulose in a narrow sense).

### Liquid

The deinking material 200 may be a liquid containing a hydrophilic material or a hydrophobic material.

Examples of the hydrophilic material include polyvinyl alcohol, polyacrylamide, polymethacrylic acid type resin, polyacrylic acid type resin, starch, carboxymethyl cellulose, hydroxyethyl cellulose, methyl cellulose, hydroxypropyl cellulose, gelatin, pullulan, alginic acid, guar gum, locust bean gum, xanthan gum, pectin, carrageenan, polyamidine, polyethylene oxide, polyacrylamide, polyvinylacetamide, polydioxolane, polyvinylphenol, polyglycerin, acryloyloxyethyltrimethyl, ethylene imine type resin, polystyrene sulfonic acid type resin, isoprene type sulfonic acid resin, polyethylene glycol type resin, polyvinyl pyrrolidone type resin, polymaleic acid type resin, polyitaconic acid type resin, sodium 2-acryloylamino 2-methylpropanesulfonic acid type resin, and the like.

On the other hand, examples of the hydrophobic material include polyvinyl acetate type resin, acrylic type resin, urethane type resin, polyethylene type resin, polypropylene type resin, polystyrene type resin, polyvinyl chloride type resin, polyethylene terephthalate type resin, polybutylene terephthalate type resin, nylon type resin, polycarbonate type resin, vinyl acetate acrylic copolymer, vinyl acetate ethylene copolymer, acrylic styrene copolymer, acrylic urethane copolymer, vinyl chloride acrylic copolymer, vinyl chloride ethylene copolymer, and the like.

In a case where the deinking material 200 is a liquid as described above, it is possible to agglutinate the coloring materials CM with each other. Therefore, in the separating portion 4, the coloring material CM can be easily separated from the fiber FB.

The separating portion 4 has a function of removing (separating) the coloring material CM separated from the fiber FB of the defibrated material M3, sending the defibrated material M3 to the sorting portion 14, and sending (collecting) the coloring material CM and the deinking material 200 to the collecting portion.

The separating portion 4 is not particularly limited as long as it has the above functions, and may be formed of a cyclone type or a sieve type.

In the case of the cyclone type, the separating portion 4 can be configured to include a conical housing having a supply port and a discharge port to which the defibrated material M3, the coloring material CM, and the deinking material 200 are supplied, and an air flow generation source for generating a swirling flow in the housing. In addition, the defibrated material M3, the coloring material CM, and the deinking material 200 are separated by the difference in specific gravity.

On the other hand, in the case of the sieve type, the separating portion 4 is configured to include, for example, a mesh body having a cylindrical shape, and functions as a sieve rotating around the central axis. As a result, the coloring material CM, the deinking material 200, or aggregates thereof which are smaller than the mesh opening of the sieve falls from the mesh body. On the other hand, the fiber FB does not fall from the mesh opening of the mesh body and is sent out to the sorting portion 14.

As described above, the processing apparatus 1 includes the separating portion 4 that separates and removes the supplied deinking material 200 from the defibrated material M3. As a result, by this separating portion 4, the defibrated material M3' (fiber FB) from which the coloring material CM is removed can be sent to the sorting portion 14, and as described above, it is possible to manufacture the sheet S using the defibrated material M3' from which the coloring material CM is removed. As a result, the sheet S with high whiteness can be obtained.

As described above, the deinking material 200 can be supplied to the defibrated material M3, and the defibrated material M3 and the deinking material 200 can be mixed and agitated by the agitating portion 2. As a result, the coloring material CM contained in the defibrated material M3 is separated from the fiber FB and so-called deinking processing is performed. In particular, the mixing step and the agitating step can be collectively performed as the mixing and agitating step by the agitating portion 2, and the efficiency of the deinking processing can be enhanced.

### Second Embodiment

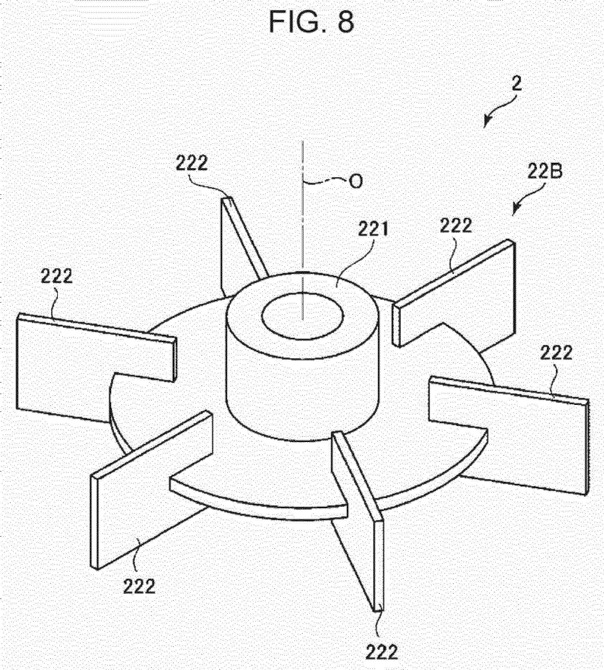

Fig. 7 is a partial cross-sectional view of an agitating portion provided in a second embodiment of the processing apparatus of the invention. Fig. 8 is a perspective view showing a rotary blade provided in the agitating portion of the processing apparatus shown in Fig. 7.

Hereinafter, the second embodiment of the sheet manufacturing apparatus of the invention will be described with reference to these drawings. The differences from the above-described embodiment will be mainly described, and description of similar items will be omitted.

This embodiment is the same as the first embodiment except that the configuration of the rotary blades is different from that of the first embodiment.

As shown in Fig. 7, in the embodiment, the rotary blades 22 include a first rotary blade 22A and a second rotary blade 22B that rotate around the same axis. As a result, the defibrated material M3 and the deinking material 200 can be mixed and agitated with the two rotary blades, and the deinking processing can be performed more effectively.

The first rotary blade 22A and the second rotary blade 22B are arranged in this order from the bottom side of the chamber 21 and are fixed to the shaft 220. In addition, the first rotary blades 22A have the same configuration as the rotary blade 22 shown in Fig. 4.

On the other hand, as shown in Fig. 8, the second rotary blade 22B includes a boss 221 and a plurality of blades 222 (six in the configuration shown in the drawing) formed to protrude in the circumferential direction from the boss 221 and arranged around the rotation axis of the rotary blades 22. In addition, the shape of each blade 222 of the second rotary blade 22B is the same as that of the blade 222 of the first rotary blade 22A, and the shape is provided so that the direction of rotation is the thickness direction. That is, the blades 222 of the second rotary blade 22B are not inclined.

As described above, in the embodiment, the directions of installation of the blades 222 are different between the first rotary blade 22A and the second rotary blade 22B. As a result, different air flows from each other can be generated between the first rotary blade 22A and the second rotary blade 22B, and thus the deinking processing can be performed more effectively.

In addition, in the configuration shown in the drawing, the first rotary blades 22A and the second rotary blades 22B have the same direction of rotation and generate a swirling flow that blows upwards by the first rotary blades 22A. Therefore, a phenomenon that shear is applied to the blown defibrated material M3 while scattering the second rotary blade 22B in the circumferential direction is likely to occur, and the deinking processing can be performed more effectively.

The invention is not limited to the above configuration. For example, the first rotary blade 22A and the second rotary blade 22B may be rotated in opposite directions or at different rotational speeds. In this case, for example, it can be realized by connecting the first rotary blade 22A and the second rotary blade 22B to a dedicated shaft and rotating the blades.

### Third Embodiment

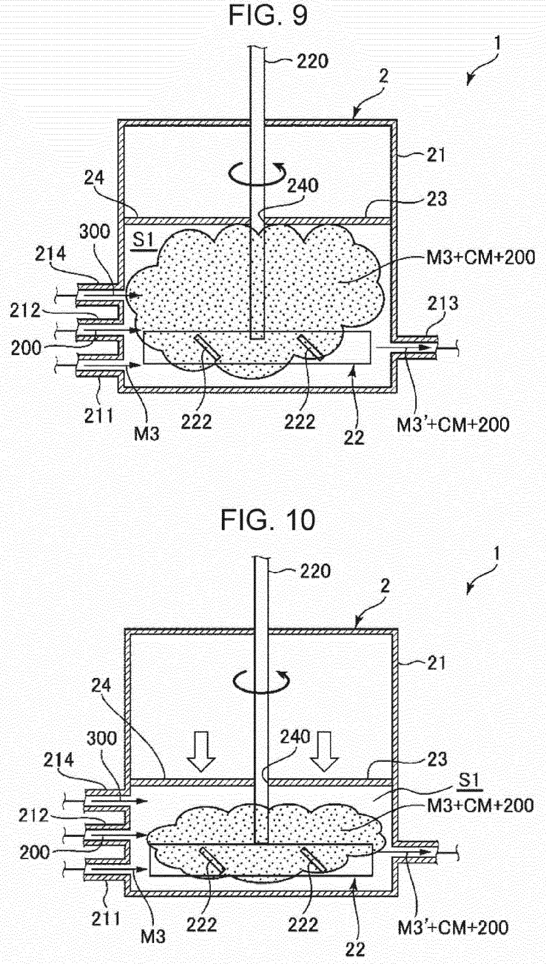

Figs. 9 and 10 are partial cross-sectional views of an agitating portion provided in a third embodiment of the processing apparatus of the invention.

Hereinafter, the third embodiment of the sheet manufacturing apparatus of the invention will be described with reference to these drawings. The differences from the above-described embodiment will be mainly described, and description of similar items will be omitted.

This embodiment is the same as the first embodiment except that a partition wall is provided in the agitating space. The same change can be made to the second embodiment.

As shown in Figs. 9 and 10, in the embodiment, the agitating portion 2 includes an adjusting unit 23 for adjusting the volume of the agitating space S1 in the chamber. As a result, the deinking processing can be performed more reliably and effectively.

The adjusting unit 23 includes a partition wall 24 partitioning a portion of the agitating space S1 and a moving unit (not shown) for moving the partition wall. The partition wall 24 has an insertion hole 240 through which the shaft 220 is inserted, and is formed of a plate material whose thickness direction is a longitudinal direction of the shaft 220. In addition, the partition wall 24 divides the inside of the chamber 21 vertically, and the lower side, that is, the space where the rotary blade 22 exists is the agitating space S1. In addition, the moving unit (not shown) is connected to the partition wall 24 and is movable along the longitudinal direction of the shaft 220. With such an adjusting unit, the volume of the agitating space S1 can be easily adjusted.

Examples of the moving unit include a mechanism for moving by a motor, a mechanism having a linear guide and a ball screw, and the like. The operation of these driving sources is controlled by a control unit (not shown).

By including such an adjusting unit 23, for example, in a case where the amount of defibrated material M3 is relatively small or the amount of coloring material CM is relatively large, it is possible to reduce the volume of the agitating space S1 from the state shown in Fig. 9 by moving the partition wall 24 toward the bottom side as shown in Fig. 10. Therefore, even in such a case, the deinking processing can be performed more reliably. That is, the degree of deinking (mixing, agitating) can be adjusted according to the amount of the defibrated material M3, the amount of the coloring material CM, and the like. In addition, reducing the volume increases the frequency of collision between the deinking material 200 and the defibrated material M3 or between the defibrated material M3 and the rotary blades, so that the deinking processing can be performed more effectively.

### Fourth Embodiment

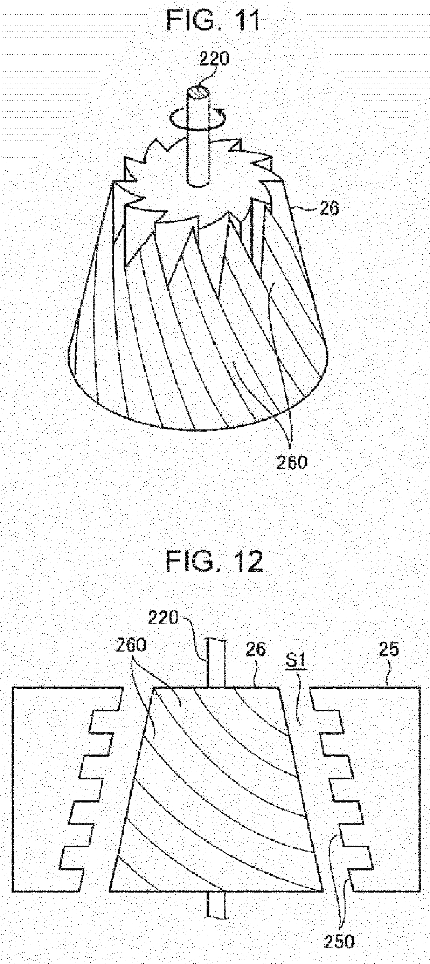

Fig. 11 is a perspective view of a rotary blade provided in a fourth embodiment of the processing apparatus of the invention. Fig. 12 is a cross-sectional view of an agitating portion provided in the fourth embodiment of the processing apparatus of the invention.

Hereinafter, the fourth embodiment of the sheet manufacturing apparatus of the invention will be described with reference to these drawings. The differences from the above-described embodiment will be mainly described, and description of similar items will be omitted.

This embodiment is the same as the first embodiment except that the configuration of the agitating portion is different from that of the first embodiment. The same change can be made to the second embodiment.

As shown in Fig. 11 and Fig. 12, in the embodiment, the agitating portion 2 includes a cylindrical body 25 having teeth (fixed teeth) 250 formed on an inner periphery portion, and a rotating body 26 having teeth 260 formed on an outer periphery portion and rotating inside the cylindrical body 25. As a result, the deinking processing can be performed between the cylindrical body 25 and the rotating body 26.

The cylindrical body 25 has a shape in which the inner diameter gradually decreases upward (inwardly conically tapered). In addition, the teeth (fixed teeth) 250 in the inner periphery portion have a spiral shape. The rotating body 26 is a so-called bevel gear having a shape in which the outer diameter gradually decreases upward (conically tapered). In addition, the teeth 260 of the outer periphery portion are inclined with respect to the rotation axis O thereof.

The defibrated material M3 and the deinking material 200 are supplied to such an agitating space S1 between the cylindrical body 25 and the rotating body 26 to rotate the rotating body 26. Therefore, defibrated material M3 and the deinking material 200 collide with the teeth 250 and the teeth 260, so that the deinking processing can be performed.

### Fifth Embodiment

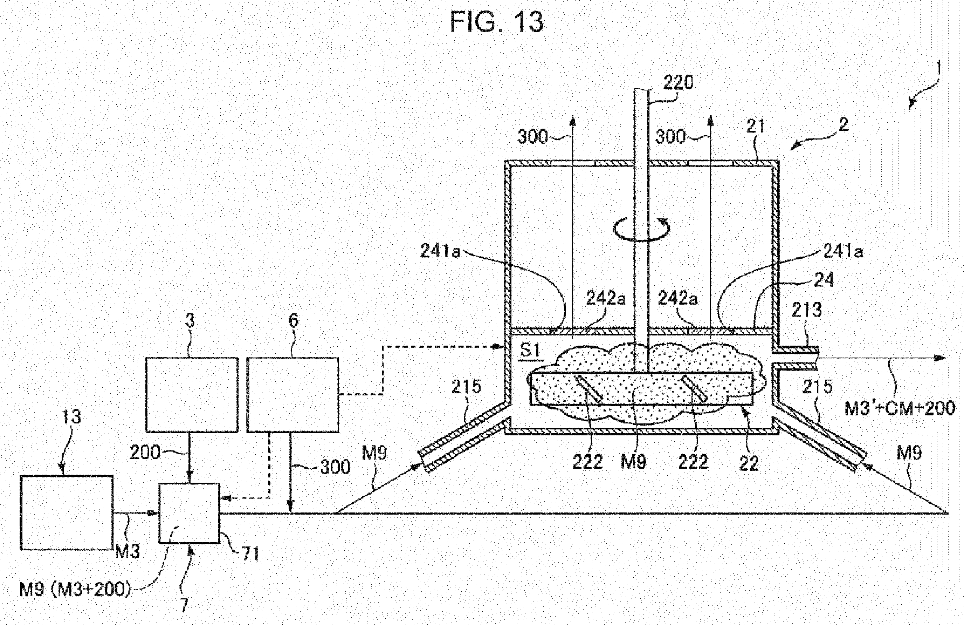

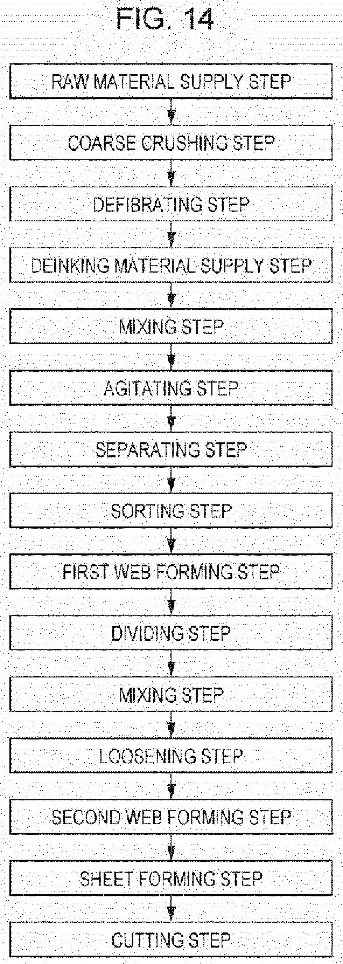

Fig. 13 is a schematic configuration view (partial cross-sectional view) showing a fifth embodiment of the processing apparatus of the invention. Fig. 14 is a flow chart sequentially showing steps performed by a sheet manufacturing apparatus provided with the processing apparatus shown in Fig. 13.

Hereinafter, the fifth embodiment of the sheet manufacturing apparatus of the invention will be described with reference to these drawings. The differences from the above-described embodiment will be mainly described, and description of similar items will be omitted.

This embodiment is the same as the first and third embodiments except that the configuration of the agitating portion is different from these of the first and third embodiments. The same change can be made to the second embodiment.

As shown in Fig. 13, the processing apparatus 1 of the embodiment further includes a mixing portion 7 provided between the defibrating portion 13 and the agitating portion 2. The mixing portion 7 includes a chamber 71. In addition, the deinking material supply portion 3 is connected to the chamber 71, and the defibrated material M3 defibrated in the defibrating portion 13 is mixed with the deinking material 200 in the chamber 71 (mixing step) (refer to Fig. 14).

A mixture M9 mixed in the mixing portion 7 is directed to the agitating portion 2 with the gas (for example, air) 300 supplied by the gas supply portion 6.

In the embodiment, the agitating portion 2 is provided with a plurality of mixture supply portions 215 to which the mixture M9 is supplied, although this is not essential, and equally can be provided without the mixing portion 7. As the mixture M9 is supplied into the agitating space S1, the mixture M9 is agitated by the rotary blades 22 and the deinking processing is performed (agitating step) (refer to Fig. 14).

As described above, in the embodiment, after the mixing step is performed in the mixing portion 7, the agitating step is performed in the agitating portion 2. Even with such a method, effects similar to those of the above-described first embodiment can be obtained. Furthermore, since the mixing portion 7 also functions as a storage portion for temporarily storing the mixture M9, it is possible to easily adjust the supply amount of the mixture M9 to the agitating portion 2.

That is, the processing method is performed by the processing apparatus 1 shown in Figs. 1 and 2, and includes the deinking material supply step of supplying the deinking material 200 to the defibrated fiber M3 serving as the defibrated fiber, the mixing step of mixing the supplied deinking material 200 and the defibrated fiber M3 serving as the defibrated fiber, and the agitating step of agitating the mixture obtained in the mixing step (refer to Fig. 14).

As a result, in a case where the coloring material CM is adhered to the defibrated material M3 serving as the defibrated fiber, the deinking material 200 can be supplied to the defibrated material M3. By mixing (dispersing) and agitating (shearing) the defibrated material M3 and the deinking material 200, it is possible to effectively remove the coloring material CM from the fiber.

In addition, as shown in Fig. 13, the partition wall 24 of the agitating portion 2 includes a ventilation port 241a. The ventilation port 241a is formed of a through-hole penetrating in the thickness direction of the partition wall 24. Even if a gas (for example, air) is supplied into the agitating space S1 by the ventilation port 241a, the gas (air) escapes to the outside of the agitating space S1 via the ventilation port 241a. Therefore, it is possible to inhibit the inner pressure of the agitating space S1 from being excessively increased, so that supply of the mixture M9 and supply of gas (air) can be stably performed.

In addition, a mesh 242a (mesh body) is provided in the ventilation port 241a. The mesh 242a has mesh openings of a size that allows air to pass through, and does not allow the defibrated material M3 and the deinking material 200 not to pass through. As a result, it is possible to inhibit the defibrated material M3 and the deinking material 200 from escaping to the outside via the ventilation port 241a. The ventilation portion 241a can also be provided in the other embodiments, with or without the partition wall 24.

In addition, a through-hole (exhaust port) communicating the inside and the outside of the chamber is provided in the upper portion of the chamber 21. As a result, the air discharged through the ventilation port 241a can escape to the outside of the chamber 21.

By making the air pressure of the air 300 or the amount of the air 300 supplied from the gas supply portion 6 relatively high, the mixture M9 is agitated by this air flow when supplied to the agitating portion 2. That is, mixing and agitating are also performed by supplying air 300. As a result, for example, the rotary blade 22 can be omitted, and the configuration of the agitating portion 2 can be simplified. In addition, in a case where the agitating is performed by both of the rotary blade 22 and the air 300, the deinking can be performed more effectively.

As indicated by a dotted line in Fig. 13, the gas supply portion 6 may be configured to supply the air 300 to the mixing portion 7, or may be configured to supply the air 300 to the agitating portion 2, or both.

Hereinbefore, although the processing apparatus, the sheet manufacturing apparatus, and the processing method of the invention are described with reference to the illustrated embodiments, the invention is not limited thereto. In addition, each portion forming the processing apparatus and the sheet manufacturing apparatus can be replaced with an arbitrary configuration capable of exerting the same function. In addition, arbitrary components may be added.

In addition, the processing apparatus and the sheet manufacturing apparatus of the invention may be a combination of any two or more configurations (features) of each embodiment described above.

In addition, a configuration may be adopted in which the coloring material and the deinking material separated (removed) by the separating portion are further separated, the deinking material is collected, and the deinking material is reused. In this case, it is preferable to have a flow path for returning the separated and collected deinking material to any one of the deinking material supply portion, the mixing portion, and the agitating portion.

The entire disclosure of Japanese Patent Application No. 2017-254974 filed December 28, 2017 is expressly incorporated herein by reference.

## Claims

1. A processing apparatus (1) comprising:
a deinking material supply portion (3) configured to supply a deinking material (200) to defibrated fibers (M3); and
an agitating portion (2) configured to agitate in a state where the deinking material and the fibers are mixed.

2. The processing apparatus according to Claim 1,
wherein the agitating portion includes a chamber (21) and a rotary blade (22) configured to rotate in the chamber.

3. The processing apparatus according to Claim 2,
wherein the rotary blade includes a plurality of radially extending blades (222) arranged circumferentially around a rotation axis (O) of the rotary blade.

4. The processing apparatus according to Claim 2 or Claim 3,
wherein the rotary blade includes a first rotary blade (22A) and a second rotary blade (22B) that rotates in the chamber around the same axis.

5. The processing apparatus according to any one of Claims 2 to 4, further comprising:
an adjusting unit (3) configured to adjusts a volume of an agitating space within the chamber.

6. The processing apparatus according to Claim 5,
wherein the adjusting unit includes a movable partition wall (24) that selectively partitions the agitating space.

7. The processing apparatus according to Claim 6,
wherein the partition wall includes a ventilation port (241a).

8. The processing apparatus according to any one of the preceding claims, wherein the agitating portion includes:
a cylindrical body (25) that has teeth (250) formed on an inner periphery thereof; and
a rotating body (26) that rotates inboard of the teeth and has teeth (260) formed on an outer periphery thereof.

9. The processing apparatus according to any one of the preceding claims, further comprising:
a separating portion (4) configured to separates the deinking material from the mixed deinking material and the fibers.

10. A sheet manufacturing apparatus comprising:
a defibrating portion (13) configured to defibrates a fiber-containing material (M2); and
the processing apparatus according to any one of the preceding claims.

11. A processing method comprising:
supplying a deinking material (200) to defibrated fibers (M3); and
mixing and agitating the deinking material and the fibers.

12. The processing method according to Claim 11,
wherein the mixing and agitating is performed by a gas (300).

13. A processing method comprising:
supplying a deinking material (200) to defibrated fibers (M3);
mixing the deinking material and the fibers into a mixture; and
agitating the mixture.

14. The processing method according to Claim 13,
wherein the mixing and the agitating are performed by a gas (300).
